# EUROPEAN PATENT APPLICATION

(11) **EP 1 308 772 A2**
(43) Date of publication of application: **07.05.2003**
(21) Application number: 02257571.6
(22) Date of filing: 31.10.2002
(51) Int. Cl.: G02F 1/313, G02F 1/017, G02F 1/225, G02B 6/28

(54) **A multimode interference (MMI) device**

(30) Priority: 06.11.2001 GB 0126621
(71) Applicant: Nanyang Technological University, Singapore 639798 (SG)
(72) Inventor: Lam, Yee Loy, Singapore 680271 (SG); Chan, Yuen Chuen, Singapore 138678 (SG); Wu, Jianqing, V5G4N2 Vancouver (CA); Dowd, Philip, Grange-over-Sands, Cumbria LA11 6AN (GB)
(74) Representative: Finnie, Peter John

(57) **Abstract**

In the present invention, there is provided an optical device comprising a multimode interference (MMI) optical waveguide section (12) having a number of electrodes (14,15) extending over at least a portion of the length of the MMI section, where the application of an electrical bias to an electrode causes a local change in effective refractive index of the MMI section, thereby causing light preferentially to propagate along a path defined by the configuration of said electrode. Whereas current injection has been demonstrated in the prior art, the present invention operates by the application of a reverse bias electric field, via suitably shaped electrodes, to locally increase the refractive index within part of the device. Thus the electrodes on the device are used to create new wave guiding paths, rather than to minimise mode coupling to crossover states, as is the case with prior art devices. The shape and extent of the induced waveguides can be controlled by the shape of the electrodes. Furthermore, by applying known techniques, electrodes can be designed which slow the speed of propagation of the controlling microwave signal, so as to match its speed to that of the optical signal confined in the induced waveguide. This permits much faster operation of the device and correspondingly higher frequency of signal modulation or switching.

## Description

### Field of the Invention

The present invention relates to devices capable of optical modulation, attenuation and/or optical switching, and more particularly to such devices realised using multi-mode interference (MMI) couplers.

### Background to the Invention

Developments in information technology have dramatically increased the demand for telecommunication and data communication channels. This demand has been fuelled by the growth of Internet usage and other services, including video telephony and video-on-demand, and the demand will continue to grow. To meet this growing need for increased data transmission, and to cater for the high bandwidth required by some applications, the development of wide band optical networks to or near the home is required. An example of this is fibre-to-the-home (FTTH), which will require low cost photonic components in order to be practical. Among the devices used in such optical networks, high-speed modulators, switches, attenuators, multiplexers and demultiplexers play very important roles.

Optical modulators are devices that are able to control the amount of light passing through them. Modulators have been fabricated from materials including lithium niobate, compound semiconductors and polymers. Each material type possesses certain properties making them a suitable basis for an optical modulator, although the operational principle may be different in each case.

Lithium niobate crystals were chosen very early on as a substrate for the fabrication of Mach-Zehnder (MZ) type modulators, which are based on the MZ interferometer. In this type of device, an input optical signal is split and routed along two different optical paths, or arms, after which it recombines. Typically, the optical path length of one arm may be varied, by the application of an electric field for example. As a result of the different path lengths travelled by the beams in the two arms, a phase difference may be introduced between the two beams such that, when they recombine, only a portion of the light will propagate to the output port. Consequently, the output optical signal strength is different from that of the input optical signal. Although these devices have the advantages of low optical loss and high electro-optic coefficient, they have numerous disadvantages. The devices are typically quite large, with lengths of several centimetres. Also there is difficulty in matching the speed of the controlling microwave signal to that of the optical signals. This is typically achieved through the inclusion of a layer with low dielectric constant, which ensures a reduced effective refractive index at microwave frequencies. It is also extremely difficult to integrate these devices with light sources to form compact, high-speed modulated light emitters.

Polymer as a material choice for the fabrication of optical devices is less well developed than lithium niobate and compound semiconductors, and only recently has there been active interest. It has some attractive features for integrated optical applications. It can be deposited on many substrates in the form of multi-layers by a spin-on technique, and can be patterned by photo-bleaching or dry-etching. It also offers a low propagation loss and a low dielectric constant, which is important for high speed devices. After poling treatment, it has a strong electro-optic (EO) effect which readily allows a refractive index change nearly equal to that which can typically be achieved in bulk GaAs. However, the required poling electric field strength is very high, and issues such as air breakdown become a problem. At present, this area of research is still under investigation to obtain suitable materials without high temperature, high electric field poling and with adequate stability. However, the long-term stability of these materials for such applications has yet to be established.

With advances in semiconductor epitaxial growth technology such as molecular beam epitaxy (MBE) and metal-organic chemical vapour deposition (MOCVD), the quality of compound semiconductor heterostructures, lattice matched to substrates such as GaAs and InP, is extremely high. Lasers and modulators fabricated on these materials are well developed and have been utilized in practical applications. Optical modulators fabricated from semiconductor materials operate based on two physical effects. One method uses the electro-optic (EO) effect, whereas the other uses the electro-absorption (EA) effect, which can be realised in single or multiple quantum well (QW or MQW) structures by means of the quantum-confined Stark effect. In this effect, the optical absorption of the material at a given wavelength is controlled by the strength of an applied electric field.

An advantage of electro-optic modulators fabricated on semi-insulating GaAs/AlGaAs structures is the flexibility afforded in the design of optical waveguides, required for light confinement. This arises from the large refractive index change that can be achieved simply by changing the Al composition of the layers. Travelling wave electrodes may also be incorporated in this technology, leading to very broad bandwidth device operation, if the speed matching between applied microwave signal (for electrical modulation) and optical signal is sufficiently accurate. High electrical efficiency can be achieved by inserting a heavily doped layer beneath the core structure, although at the expense of sacrificing some microwave power. The use of doped semiconductor layers can also increase the microwave losses. A further disadvantage of this type of device is its polarization sensitivity.

EA modulators are the shortest devices of their type available, with lengths as short as 300 µm, and can be integrated with semiconductor lasers. Due to the refractive index dispersion associated with the change in optical absorption, this type of device suffers from large chirp, which may significantly broaden the spectral line width and also limit the useful bandwidth of the device. Although travelling wave electrodes have been implemented on an EA modulator, there is a conflict between device length and insertion loss. The device also exhibits polarization sensitivity, which may be reduced by the introduction of strained layers into the QW region. Strained layer growth may be readily achieved through modern epitaxial techniques. However, the inclusion of strained layers imposes some limits on the device structure, including layer thickness, if high quality defect-free layers are to be produced.

A waveguide device, which uses electrodes disposed asymmetrically about an optical waveguide, has also been proposed for optical modulation and switching. By applying a different bias to the asymmetric contacts, the lateral refractive index profile, and hence the optical guiding properties of the waveguide, can be controlled through the EO effect. This technique allows for modulation and/or switching functionality. Although the approach extends the use of existing EO based devices, it is still typically based on substrates such as LiNbO₃, making integration with other devices difficult.

Optical switches are very important devices for communication networks as they enable the all-optical routing of signals, without the need for optical-to-electrical (OE) conversion and optical signal regeneration. A recent development in the field of optical switching has been the use of multimode interference devices, where the switching function may be realised by the application of an electric signal to locally modify the refractive index within the device and thereby its optical guiding properties. The core component of the device is a 2 x 2 multi-mode interference (MMI) coupler, with an electrode placed along the centre of the MMI section. Ordinarily the device is designed to operate in the cross state, whereby an input optical signal emerges from the 'opposite' output port. When current is injected into the device, the refractive index at the centre of the MMI region decreases. This leads to reduced crossing of light from the input ports and therefore preferential coupling to the 'through' port, i.e the input light propagates undeviated in a straight-line path to the output port. This concept has been extended to form a 3x3 switch.

However, there are some limitations in performance. Firstly, the device relies on current injection. Within the semiconductor material, the current can diffuse laterally leading to a more uniform index change across the whole device rather than a localized increase. Therefore, some means is required to restrict the current flow. Secondly, the carrier lifetime within the semiconductor is likely to be the limiting mechanism for the speed of device response to the modulation signal, resulting in a lower maximum operating frequency than for devices that rely on a field effect and which utilise travelling wave electrodes. Finally, spontaneous emission has been observed at the output ports of such devices, a consequence of forward biasing the p-i-n junction.

### Summary of the Invention

According to the present invention, there is provided an optical device comprising a multimode interference (MMI) optical waveguide section having a number of electrodes extending over at least a portion of the length of the MMI section, wherein the application of an electrical bias to an electrode causes a local change in effective refractive index of the MMI section, thereby causing light preferentially to propagate along a path defined by the configuration of said electrode.

Preferably, at least one of the input ports comprises a single mode waveguide.

Preferably, at least one of the output ports comprises a single mode waveguide.

Preferably, at least part of the MMI region comprises a MMI coupler.

Preferably, at least part of the MMI region comprises a material in which a refractive index rise can be induced by means of an applied electric field. Preferably, the material has a large electro-optic coefficient.

The operation of the present invention can be optimised by locating the peak intensity patterns within the multimode waveguiding section and using mode-imaging to determine the optimal electrode positions, thereby determining the modal propagation characteristics of the device, when an electric field is applied.

Preferably, the electrodes commence at a location, above the MMI region, where single, or multiple, images of the input beam occur. In this way light can be efficiently collected by the transversely confining waveguide structures induced by the application of an electric field. More preferably, the electrodes commence at a location, above the MMI region, where single, or multiple, images of the input beam first occur, *i.e.* after a single half period of the MMI coupler. In this way, the length of the device can be minimized, which is preferable for high speed operation.

Preferably, the device comprises a semiconductor heterostructure using III-V semiconducting materials for ease of integration with other devices.

The performance of the device can be enhanced by incorporating a single quantum well (QW), or multiple quantum wells (MQW), into the device structure in order to achieve a large quadratic electro-optic coefficient. Importantly, the quadratic electro-optic effect is not sensitive to polarization or crystal orientation.

It is therefore preferred that at least a portion of the structure, in proximity to the MMI region where transverse optical confinement is to be electrically induced, comprises at least one quantum well.

Preferably, the QW structure is biased such that the band edge is sufficiently far from the operational wavelength so that there is substantially no absorption of the light. This permits efficient operation of the device. However, when the device is used as a modulator, a small amount of absorption can be tolerated in the induced waveguide regions as this merely adds to the extinction ratio of the device. A further advantage associated with the use of QW structures is that, by the application of a quantum well intermixing (QWI) process, the present invention can be seamlessly integrated with other photonic devices.

Whereas current injection has been demonstrated in the prior art, the present invention operates by the application of a reverse bias electric field, via suitably shaped electrodes, to locally increase the refractive index within part of the device. Thus the electrodes on the device are used to create new waveguiding paths, rather than to minimise mode coupling to cross-over states, as is the case with prior art devices. By using a field-based effect, rather than current injection, the problems associated with current diffusion can be avoided. The shape and extent of the induced waveguides can be controlled by the shape of the electrodes. Furthermore, by applying known techniques, electrodes can be designed which slow the speed of propagation of the controlling microwave signal, so as to match its speed to that of the optical signal confined in the induced waveguide. This permits much faster operation of the device and correspondingly higher frequency of signal modulation or switching.

In the application of the present invention to optical modulation, problems encountered with prior art modulator devices are overcome by the new structure, which is fabricated from compound semiconductors and based on multimode interference (MMI) coupling devices.

When used as a modulator it is preferred that, in the absence of an applied electric field, light is substantially coupled to the desired output port. Conversely, in the presence of an applied electric field, it is preferred that light is substantially coupled away from the desired output port.

Careful design of the MMI couplers allows for the construction of very short devices, with lengths comparable with those for electro-absorption modulators. The MMI-based modulator may achieve very wide bandwidths, since travelling wave electrode configurations may be readily implemented to increase the maximum frequency of operation. There is no conflict between device length and extinction ratio, and decreasing the device length does not require an increase in the applied electric field. As strong absorption is not necessary for device operation, chirp can be substantially avoided. The inclusion of a complementary output port may enhance device functionality, for example, through differential output.

By applying an electric field of intermediate strength, a variable amount of light may be coupled to the desired output port. In this way the present invention may be used as a variable optical attenuator.

With the application of further output ports, the device can be used as the basis of a 1xN switch (where N>1) depending on the MMI coupler design and electrode configuration. Cascades of such devices may also be used to realise this function, and may offer a more simple fabrication. The speed of MMI based switches can be much faster than that of switches based on microelectromechanical (MEM) devices.

Devices fabricated in accordance with the present invention may have the utility for the modulation, attenuation and routing of optical signals. This type of structure, together with the operational mode has not previously been applied to switching and modulation functions. The devices offer the performance and design advantages arising from the properties of MMI devices. Furthermore, improved modal control is achieved, as the waveguiding regions are preferentially formed at the location of suitably designed electrodes, rather than using an applied signal to prevent light from propagating within waveguiding regions.

### Brief Description of the Drawings

Examples of the present invention will now be described in detail with reference to the accompanying drawings, in which:
Figure 1 shows a first embodiment of an MMI based optical modulator;
Figure 2 shows a cross section through a typical heterostructure for the device of Figure 1;
Figures 3A and 3B show, respectively, the longitudinal position and lateral spacing (and image FWHM) of the optical beam images in the MM waveguide as a function of waveguide width;
Figures 4A to 4F show the optical intensity distribution in the device of Figure 1 for different induced refractive index changes;
Figures 5A and 5B show the calculated device extinction ratio versus refractive index and required electric field strength, respectively;
Figure 6 shows a second embodiment of an MMI based optical modulator.
Figure 7 shows a cross section through the device of Figure 6;
Figures 8A and 8B show two types of electrode configuration for microwave and optical wave speed matching;
Figure 9 shows an alternative configuration of the device shown in Figure 6, with two output ports; and,
Figures 10A and 10B show the optical intensity distribution in the device of figure 9, both without an applied field and with an applied field, respectively.

### Detailed Description

According to the principle of self-imaging, an input field profile can be reproduced in single or multiple images at periodically spaced intervals along the propagation direction of a multimode (MM) optical waveguide. Therefore, by locating ports with a narrower lateral extent than the MM waveguide at the appropriate longitudinal position, light may be efficiently coupled into and out of the MM waveguide at particular lateral locations. Such an arrangement forms the basis of 2x2, 1x2 and 2x1 MMI coupling devices. Optical modulators based on a Mach-Zehnder (MZ) interferometer arrangement, and implemented in a waveguide structure, often use 1x2 and 2x1 MMI devices as beam splitters and recombiners. The MZ modulator usually features two separate optical paths (arms) of fixed length located between the beam splitting and recombining regions.

However, if the two arms are replaced by two strip electrodes positioned above a MMI region, which defines the recombiner section of the interferometer, a new device is formed. When an electrical bias is applied to the electrodes, the resulting local rise in refractive index, due to the electro-optic effect, constitutes two optically confining waveguides running through the recombiner section. If the electrically induced refractive index change is large enough, nearly all the light will be collected and propagate along the waveguides. As a result, very little light couples to the original output port of the recombiner. Conversely, when there is no external applied electric field the light couples almost completely to the output port. Thus, varying the applied bias varies the amount of light channelled away from the output port, permitting control over the transmission of light by the device.

In this way, the above device can function as an optical modulator or an optical attenuator. The device performance can be enhanced by the inclusion of multiple quantum well (MQW) structures beneath the electrodes, by virtue of the high electro-optic coefficient that exists due to the band-edge proximity effect. Unlike current injection devices, the electric field will mainly be concentrated in the i-region of the MQW p-i-n structure. A high frequency, travelling wave optical modulator can be realised if the modulating microwave signal travels in the same direction and at the same speed as the optical signal confined beneath the electrodes. Unlike conventional electroabsorption (EA) modulators the proposed device does not require strong absorption and can be biased slightly away from the band absorption edge. This leads to almost chirp-free operation whilst still exhibiting a high microwave efficiency of a similar order to EA modulators. Under bias, even a small absorption can be allowed in the waveguiding regions, since when operated as a modulator the absorption merely serves to increase the extinction ratio of the device.

Integration with other devices of a different structure may be achieved through an intermixing technique, whereby the band-edge is tailored according to the specific application of the device, such as switching or modulation/attenuation. One more important property is that devices can be made quite short, using this approach, since a length corresponding to only one period of a single self-image is required. Device lengths may be as short as approximately 0.5 mm, with typical device lengths of only a few millimetres. In addition, the absence of permanent optical waveguides, which may be long and narrow, means that fabrication tolerances may be relaxed and less metallization strips are required in comparison with alternative approaches. The need for alignment of narrow optical waveguides with metal T-rails is also avoided.

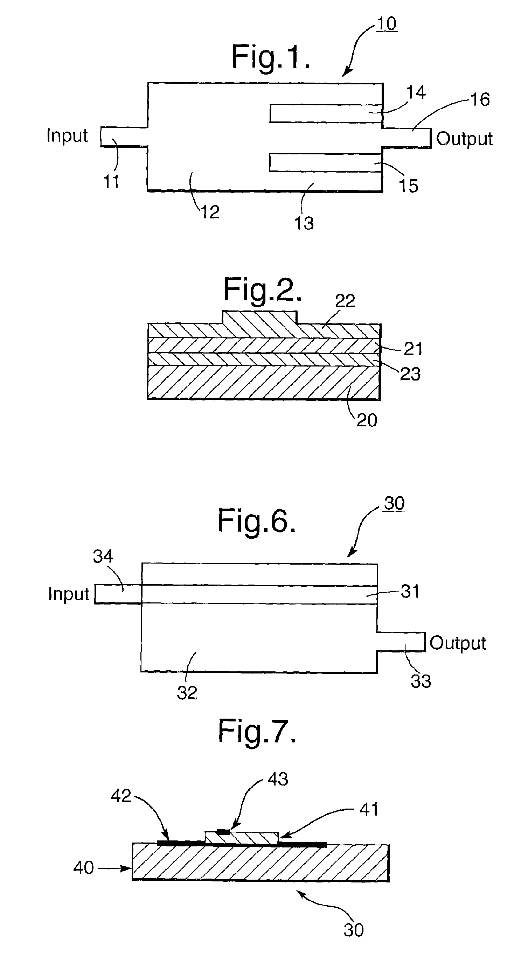

By way of example, Figure 1 shows one configuration for a modulator 10 formed by the combination of a 1x2 and a 2x1 MMI coupler. It consists of four parts. Firstly, a single mode waveguide forms the input optical port 11. The input signal is then coupled into a multimode waveguiding region 12 of length equal to an odd number of half period lengths (i.e. 0.5, 1.5, 2.5...) at the end of which the first two images (or reproductions) of the input optical signal occur. This is immediately followed by a second multimode waveguiding region 13 with, in this instance, two single mode waveguides which come into existence when an electrical bias is applied via two strip electrodes 14, 15. In general these electrodes can be of arbitrary shape. The length of the two induced waveguides 14, 15 is chosen with regard to the length of the first multimode waveguide region 12 such that, in the absence of an applied electric field, the input field profile is reproduced as a single image at the end of the second multimode waveguiding region 13. The lateral positions of the desired waveguides in the second waveguide region, and hence the associated electrodes, are determined by the location of the two images appearing at the end of the preceding waveguiding region. Finally, a permanent single mode waveguide 16 forms the optical output coupler of the device, capturing all the light in the absence of an applied field.

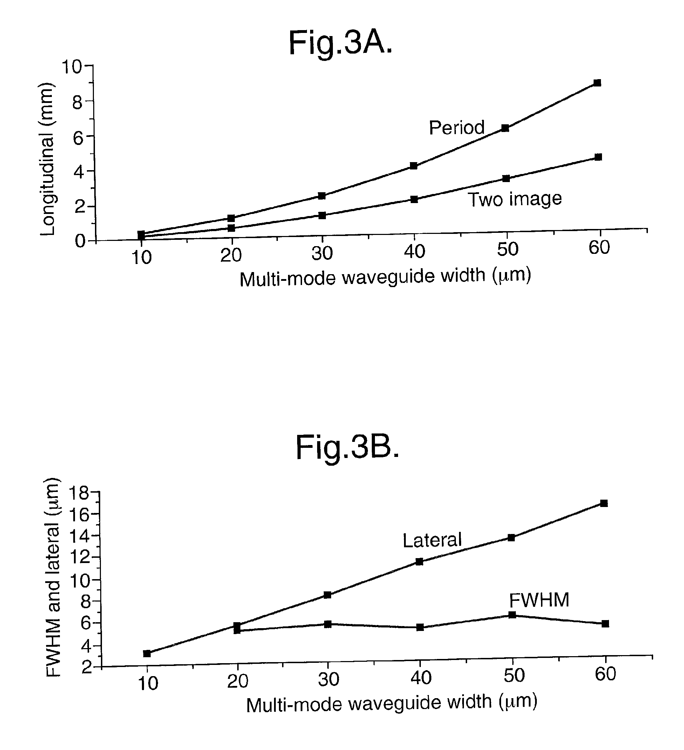

Figure 2 shows a cross-sectional view through a typical heterostructure used to implement the device 10. It comprises a number of semiconductor layers, grown on a III-V semiconductor substrate 20. The waveguiding region is formed as an intrinsic region 21, which will typically contain at least one quantum well. This is sandwiched between an upper cladding layer 22 and lower cladding layer 23, with the conductivity type of each layer being different so as to form a p-i-n junction, across which an external field may be applied. Typically, the lower cladding layer is doped to be n-type material, while the top layer is doped to be p-type material. The substrate type is usually either semi-insulating (SI) or n-doped, although p-doped substrates may also be used. In real applications, the precise values of the refractive indices will depend on the choice of semiconductor materials used in the different layers of the device. When an external field is applied to the device and its strength increased, the refractive indices of the electrically induced waveguides will increase via the quadratic electro-optic effect. If the absorption edge of the single or multiple QW structure is near to the operating wavelength of the optical signal to be processed, a small amount of absorption can occur.

A beam propagation method (BPM) has been used to perform two-dimensional modelling and analysis of the waveguiding behaviour of the device. The simulations concentrated on the refractive index range between 3.317 and 3.200 for the multimode waveguiding region. As a particular example, a simulation was performed of a device with a refractive index of 3.31 for the wafer and 3.317 for the multimode waveguiding region, in the absence of an applied electric field. The analysis allows the location of the (first period) single and double image of the input beam to be calculated. This is important as it determines the required location for the electrically-induced waveguides, and hence the positions for the corresponding electrodes.

Figure 3A shows how the longitudinal position of the (first period) single and double image varies with MM waveguide width. Due to the symmetry of the device, the one period length at which the double image appears is half that at which the single image appears. Figure 3B shows the corresponding lateral position and image size, measured by the full-width at half maximum (FWHM) of the peak intensity, as a function of MM waveguide width. For an input waveguide width of 4 µm, the width of the images remains approximately constant at nearly 5 µm. No images appear when the width of the multimode waveguide is larger than 60 µm; and images begin to overlap when it is smaller than 10 µm. The width of the multimode section can be made as small as 2 µm if the width of the access waveguide is reduced to 0.4 µm. In this way the overlapping of images can be reduced by decreasing the width of the input waveguide. As the period of the MMI device decreases monotonically with MM waveguide width, the device can also be made very short, which is advantageous for integration with other III-V photonic devices and for high frequency operation.

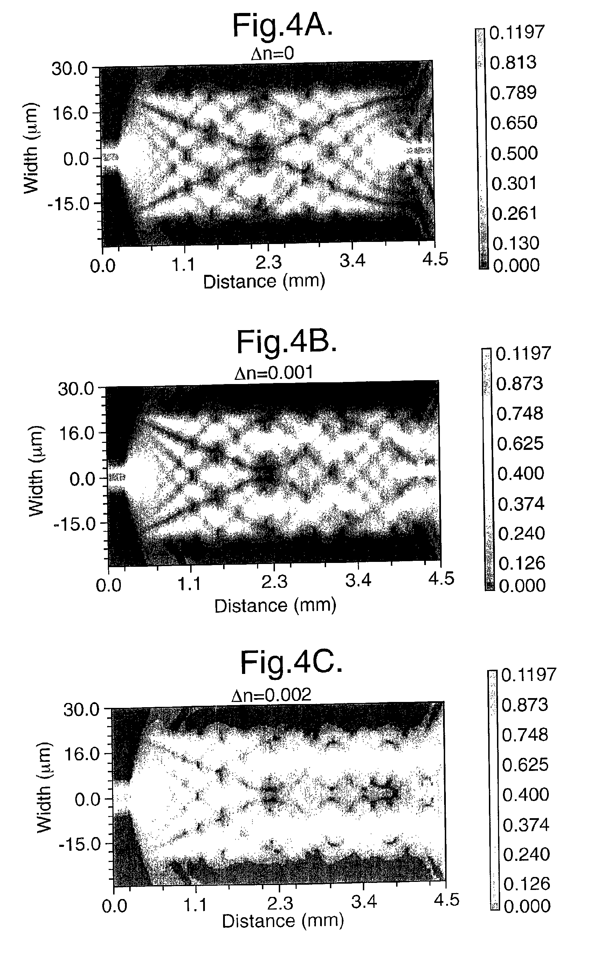

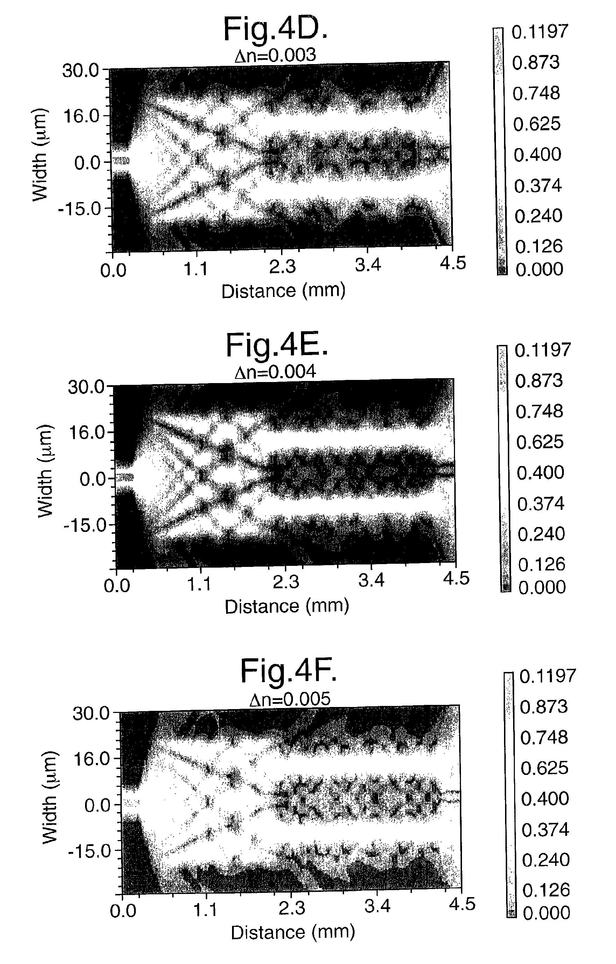

Figures 4A-4F are a series of simulated optical intensity distributions, with increasing electrically-induced refractive index change, for the device 10 shown in Figures 1 and 2. With no applied electric field (Figure 4A) it can be seen that the input optical signal couples completely to the output port. However, as the refractive index change is induced by an applied field, it is clear that two waveguiding regions are formed. Light is gradually concentrated into the waveguide regions, with almost total confinement occurring when the refractive index change reaches 0.004 (Figure 4E). For larger induced refractive index changes, the confining effect becomes increasingly efficient.

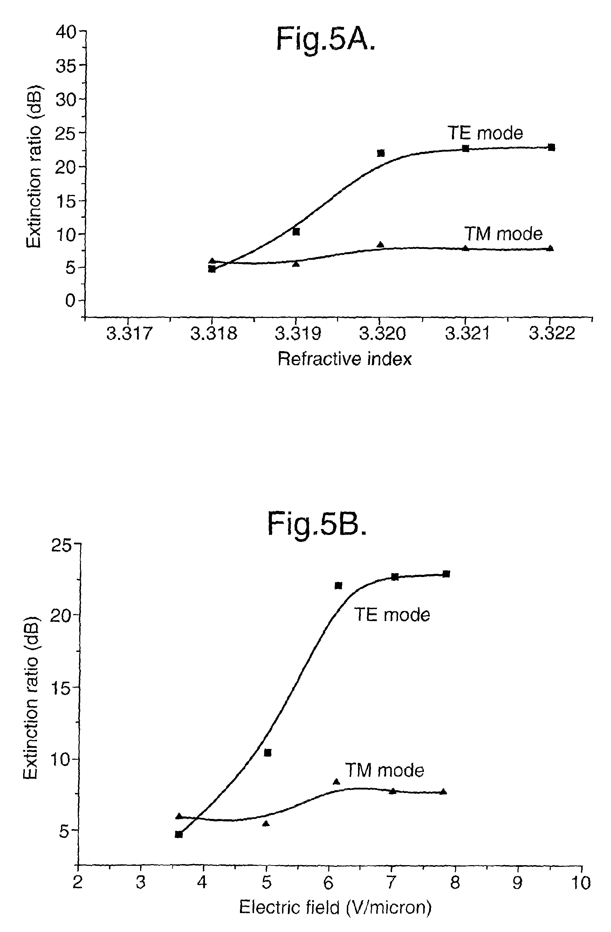

The performance of the device can be characterized by the light transmission, expressed as an extinction ratio in decibels. For the particular device modelled, the maximum extinction ratio obtained for TE-polarized light is more than 23dB. The signal attenuation calculated as a function of the electrically induced refractive index change is shown in Figure 5A, for both TE and TM polarization states. The calculated field strength required to achieve the levels of attenuation shown in Figure 5A is plotted in Figure 5B. The results imply that for a 0.6 µm thick core (intrinsic) layer, comprising a 30 period MQW structure with 10nm barriers and 10nm wells, the operating voltage required for the device to achieve maximum attenuation is approximately 5 V.

As the electrically induced waveguides terminate abruptly at the end of the multimode section, light exiting the electrically induced waveguides may impinge upon the light distribution in the output port, as can be seen in Figure 4, unless further measures are taken. The extinction ratio can be improved by a carefully designed extended waveguide section, and may be improved still further by a cascade of stages. An alternative is the inclusion of additional output waveguiding port(s), which also serve to provide a complementary output.

The different switching mechanism employed by this modulator offers some particular advantages over EA and MZ optical modulators. For example, in the off state, the main requirement is for the electrically induced waveguide to have sufficient refractive index difference (∼0.004) for good light confinement. As the operating wavelength can be selected relatively far away from the absorption edge, no compromise is required between insertion loss and extinction ratio, which is a limitation of EA modulators. However, if higher loss can be compensated by increased power from efficient laser sources, the operating wavelength can be closer to the absorption edge of the MQW structure. When an external field is applied, such that the device is in the off state, any absorption helps to eliminate residual light propagating towards the output port, thereby increasing the extinction ratio.

For high frequency operation, speed matching of the microwave and optical signals must be taken into account, otherwise the confined portion of light will leak away gradually. Whilst the refractive index of light in the InGaAsP waveguide is around 3.3∼3.5, the effective index experienced by the controlling microwave signal is around 2.6, and the speed of the microwave signal must therefore be decreased. This problem has been successfully resolved by the use of slow wave electrode structures, such as the T-rail co-planar waveguide (CPW) or fin line CPW, for example. In the case of p-i-n structures, there will be additional influences on the microwave loss and the capacitance of the device, and these must be considered when designing the electrode structures.

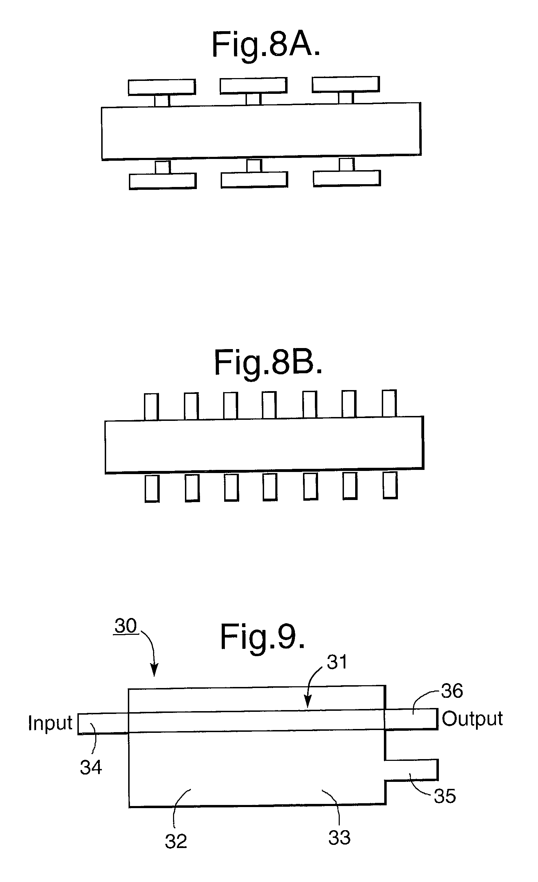

A second possible device configuration for an optical modulator 30 is shown in Figure 6. In this instance, a single electrode 31 may be used, running continuously across both multimode waveguiding regions 32, 33. The operating principle is identical to the previous device, but the electrode configuration is different, being readily aligned with the input port 34 but not the output port 35. Also, as the requirement for accurate longitudinal positioning of the electrode is removed, device processing may be more straightforward.

In designing the modulator, special care and attention must be paid to the design of the electrodes. One of the simplest electrode configurations is the micro-strip transmission line, where the bottom n⁺ layer plays the role of ground electrode and the electrode deposited over the device is patterned to form a strip. Figure 7 is a cross-section through the device illustrated in Figure 6, and shows schematically the structure of the device and the electrode positions. The device 30 has a substrate 40, a MQW region 41, with an n⁺ layer and matalization region 42 and metal top strip electrode 43.

When a slow wave is required, a number of T-rails or fins may be added to the metal top strip electrode 43, leading to a contact electrode which may take one of the forms shown in Figures 8A and 8B. Other designs of linear electrode may be implemented, provided they follow appropriate design guidelines to match the microwave velocity with that of the optical wave.

Linear electrodes, and hence straight waveguides, have been shown by way of example only. Other electrode shapes may be considered, in order to improve optical coupling to the electrically formed waveguides in some applications or to alter the propagation path, provided they do not compromise the optical guiding properties of the waveguide formed. Thus curved or zig-zag waveguides are also possible, and may be desirable in separating output channels for improved isolation. In addition to the electrodes themselves, electrical contacting arrangements must also be considered. Electrical connectivity external to the device must be made via contact pads, which may be quite large. Therefore, in addition to the electrode, links must be made to suitable contact pads. These links may be formed directly on the top surface of the device itself, provided that they do not affect the modal propagation characteristics of the waveguide. The positioning of these links should thus be considered carefully with respect to the optical field distribution within the device. Depending on the electrode configuration, it is possible to extend the electrodes beyond the multimode waveguide sections, enabling the links to be formed outside of this region, thereby minimizing the impact on the optical propagation characteristics. In another variation, an insulating layer may be deposited on the top-surface of the waveguide structure. Connection between the electrodes and the contact pads is then achieved via metal links deposited between the electrode and the contacting pad. Other similar approaches to the contacting arrangement could readily be implemented by those skilled in the art.

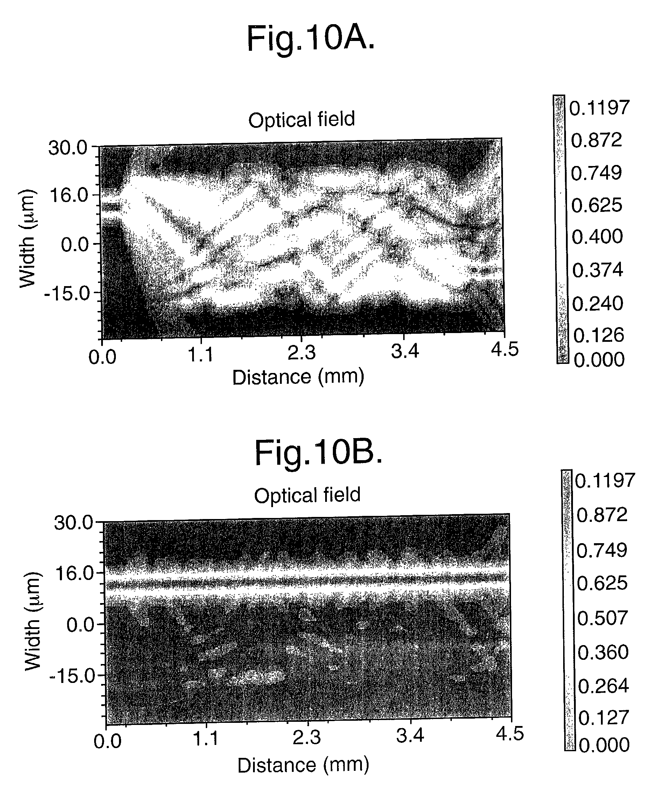

The device 30 shown in Figure 6 may be modified to have a second output port 36 located at the end of the electrode, as shown in Figure 9. This forms a complementary output for the device that may be used in one of several ways. Firstly, a photodetector may be integrated at an output port to monitor the signal strength. Such an arrangement may be used to provide a feedback mechanism between the output and the electrode and thereby accurately control the level of modulation. By taking the output from this second port and comparing it with that of the first, the device may be used in a "differential mode". Finally, the device may simply be used as a 1 x N switch, with the example shown in Figure 9 operating as a 1 x 2 switch. The light intensity distribution for the device operating in this mode is shown in Figure 10. With no applied electric field, the input light signal entering the input port 34 is guided into the output port 35 (Figure 10A). However, when an electric field is applied to the top electrode 31, the light is immediately confined by the induced waveguide and propagates to the output port 36 (Figure 10B). For changes of refractive index intermediate to the two states shown, a varying degree of light will couple to each output port. Using just the lower or the upper output port, the device can behave as a modulator or an attenuator of the signal. Using both outputs, the device can behave as a variable and tunable power splitter.

In another variation of this device, a second input port (not shown) may be included directly opposite the lower output port 35 and a second electrode (not shown) added to run across the top of the device between these two lower ports. With these additions the device can behave as a 2 x 2 switch where, in the absence of a bias applied to the electrodes, the cross transmission state is the default behaviour. Application of a bias to both electrodes causes the through state to occur for direct optical signal routing.

A key feature of all the MMI-based devices is that of reversible operation. The symmetry of the MMI section, coupled with an appropriate electrode arrangement, allows the input ports to become output ports and the output ports to become input ports. This reversible operation may be very useful when such devices are placed in a photonic circuit. Thus, with appropriate modifications, the device may behave as both a multiplexer and demultiplexer, for example. The devices are also fully bi-directional, allowing a forward travelling wave and a backward travelling wave to co-exist independently in the device and without interfering with each other, which could lead to a degradation of the device performance. The contacting electrode arrangement in this instance also needs to display symmetry such that the forward and reverse performances of the device are the same.

Finally, such devices may be grown entirely by an epitaxial procedure on a semiconductor substrate. By using implantation isolation, p-i-n structures can be utilized in the fabrication of this device, while i-i-n structures may also be used if spin-on p-type doping is available. Device dimensions as small as 10 x 350 µm² may be achieved, making such devices readily integrable with other III-V photonic components, including photodetectors and lasers. Integration may be improved through the use of localized quantum well intermixing (QWI) to specifically tailor the bandgap of different regions on a chip, such that they fulfil specific optical functions.

## Claims

1. An optical device comprising a multimode interference (MMI) optical waveguide section having a number of electrodes extending over at least a portion of the length of the MMI section, wherein the application of an electrical bias to an electrode causes a local change in effective refractive index of the MMI section, thereby causing light preferentially to propagate along a path defined by the configuration of said electrode.

2. An optical device according to claim 1, comprising at least one input port and at least one output port, wherein an end of an electrode extends to at least one of an input port or an output port.

3. An optical device according to claim 1 or 2, in which an end of an electrode is located over the MMI section at a position where an image of an optical input occurs.

4. An optical device according to any preceding claim, comprising a quantum well structure in alignment with an electrode.

5. An optical device according to any preceding claim, comprising an electrical source adapted to apply an electrical reverse bias to an electrode.

6. An optical device according to any preceding claim, in which at least one electrode is a traveling wave electrode.

7. An optical device according to any preceding claim, comprising an electrode configured to match the speed of propagation of microwave and optical signals.

8. An optical device according to any preceding claim, comprising means for varying the applied electrical bias.

9. An optical device according to claim 8, in which the electrical bias may be applied over a range of values to cause a change in the effective refractive index.

10. An optical device according to any preceding claim, wherein the electrode is straight over its entire length.

11. An optical device according to any of claims 1 to 9, in which the electrode is not straight over at least a portion of its length.

12. An optical device according to claim 11, in which the electrode is curved or zig zagged over at least a portion of its length.

13. An optical device according to claim 1, comprising a semiconductor heterostructure.

14. An optical modulator device comprising an optical device according to any preceding claim.

15. An optical modulator according to claim 14, comprising a single input port and a single output port.

16. An optical attenuator device comprising an optical device according to any of claims 1 to 13.

17. An optical attenuator according to claim 16, comprising a single input port and a single output port.

18. An optical switch device comprising an optical device according to any of claims 1 to 13.

19. An optical switch according to claim 18, comprising one or more input ports and one or more output ports.

20. An optical circuit comprising two or more optical devices according to any preceding claim coupled together.
